# EUROPEAN PATENT SPECIFICATION

(11) **EP 3 073 598 B1**
(45) Date of publication and mention of the grant of the patent: **13.02.2019**
(21) Application number: 13897975.2
(22) Date of filing: 13.12.2013
(51) Int. Cl.: H02J 3/36

(54) **COMMUTATION APPARATUS BASED ON CONTROLLABLE COMMUTATION INDUCTOR, AND IMPLEMENTATION METHOD THEREFOR**
KOMMUTIERUNGSVORRICHTUNG AUF BASIS EINER STEUERBAREN SCHALTSPULE UND IMPLEMENTIERUNGSVERFAHREN DAFÜR
APPAREIL DE COMMUTATION FAISANT APPEL À UNE INDUCTANCE DE COMMUTATION COMMANDABLE, ET PROCÉDÉ DE MISE EN OEUVRE CORRESPONDANT

(30) Priority: 19.11.2013 CN 201310585487
(43) Date of publication of application: 28.09.2016
(73) Proprietor: State Grid Corporation of China, Beijing 100031 (CN); State Grid Smart Grid Research Institute, Beijing 102211 (CN); China-Epri Electric Power Engineering Co. Ltd., Beijing 102200 (CN)
(72) Inventor: TANG, Guangfu, Beijing 102211 (CN); XU, Weihua, Beijing 102211 (CN); WEI, Xiaoguang, Beijing 102211 (CN); ZHA, Kunpeng, Beijing 102211 (CN)
(74) Representative: Vidon Brevets & Stratégie
(86) International application number: PCT/CN2013/089383
(87) International publication number: WO 2015/074304

(56) References cited:
- CN-A- 101 540 491
- CN-A- 101 540 491
- CN-A- 101 701 996
- CN-A- 102 931 673
- CN-A- 103 078 312
- CN-A- 103 337 870
- DE-A1-102008 008 587
- US-A1- 2010 314 872
- US-A1- 2012 212 983
- US-B1- 6 437 996

## Description

### Field of the Invention

The present invention relates to a commutation device for a converter valve and an implementation method thereof, and in particular, to a commutation device based on a controllable commutation inductor and an implementation method thereof.

### Background of the Invention

Commutation failure is a common fault of an inverter, and a corresponding perfection measure is urgently needed in practical application of engineering. If the existing forced commutation technology is used, a charge and discharge circuit and an auxiliary bridge arm are connected to a thyristor valve in series and parallel, and the structure of a converter valve will be greatly changed, such that the structure of a converter is complicated, resulting in an increased cost and technical problems.

Patent document CN 101 540 491 discloses a commutation device of the prior art.

### Summary of the Invention

In view of the shortcomings in the prior art, the object of the present invention is to provide a commutation device based on a controllable commutation inductor, and the other object is to provide an implementation method of the commutation device based on the controllable commutation inductor. A controllable commutation inductor type commutation bridge circuit is adopted to perfect the commutation property of an inverter side converter valve in the case of commutation failure of high voltage direct current LCC-HVDC transmission of a large size wind farm, no major change is made to a thyristor valve, and the commutation device has few in elements, easy to implement, has engineering practicability and saves a lot of costs.

The objects of the present invention are implemented by the following technical solutions: The present invention provides a commutation device based on a controllable commutation inductor. The commutation device adopts a three-phase semi-bridge structure, the three-phase semi-bridge structure is composed of serially connected commutation units, the improvements lie in that, the commutation unit includes a converter transformer and a converter inverter, and the commutation inductor is serially connected between a valve side of the converter transformer and the converter inverter; and
a controllable inductor in the commutation inductor is cooperatively used with a control and protection system in a convertor station, when the convertor station operates normally, a switch is switched on, and the controllable inductor is contained in the commutation inductor; and when the control and protection system in the convertor station detects commutation failure, the switch is switched off for perfecting the commutation property of a converter valve in the convertor station, the leakage inductance value of the commutation inductor can be reduced, the commutation angle is reduced, and the turn-off angle is increased.

Further, the commutation device includes a smoothing reactor; and the smoothing reactor is connected to an input end of the converter inverter, and the commutation unit includes the converter transformer, the commutation inductor and the converter inverter, which are connected to an alternating current bus after being connected in sequence.

Further, the converter inverter is a 12-pulse inverter, which is composed of two 6-pulse inverters, and each 6-pulse inverter forms a full bridge rectifier circuit by 6 thyristor bridge arms; one of the 6-pulse inverters is connected to the alternating current bus through two starlike transformers; and the other 6-pulse inverter is connected to the alternating current bus through triangular and starlike transformers. Further, the commutation inductor is of a three-phase structure, which is correspondingly connected to three phases of the converter transformer respectively, and the controllable inductor is composed of an inductor and a switch, which are connected in parallel; and the switch is switched on and off according to normal operation and commutation failure of the converter station.

Further, the commutation transformer adopts a single-phase transformer, including a primary coil, a secondary coil and an iron core; the magnetic core is replaced by the iron core; and the single-phase transformer adopts two starlike transformers or transformers in triangular and star shapes.

The improvement of the implementation method of the commutation device based on the controllable commutation inductor provided by the present invention based on the other object lies in that, the implementation method includes the following steps:
(1) predicting the blocking state of the inverter after commutation through the control and protection system, and judging whether commutation failure occurs; and
(2) in the case of commutation failure, switching off the switch S to reduce the leakage inductance of the commutation inductor and increase the turn-off angle.

Compared with the prior art, the present invention has the following beneficial effects:
1. The commutation device provided by the present invention adopts the controllable commutation inductor type commutation bridge circuit to perfect the commutation property of the traditional LCC-HVDC, no major change is made to the original thyristor valve and the main circuit, and the commutation device has few elements, is easy to implement, has engineering practicability and saves a lot of costs.
2. The switch in the commutation inductor is cooperatively used with the control and protection system in the converter station, the switch S is switched on in normal operation, the controllable inductor is used as a part of the commutation inductor, and when the control and protection system in the converter station monitors commutation failure, the switch S is switched off. The manner is flexible to control and generates no long-term influence on a direct current system.
3. The design value of the controllable inductor can be designed and determined according to the short circuit current resistances of the thyristor converter valve and the converter transformer, and parameters of the controllable inductor can be flexibly designed according to the specific conditions of the LCC-HVDC projects.

### Brief Description of the Drawings

Fig.1 is a schematic diagram of a commutation device based on a controllable commutation inductor provided by the present invention; wherein 1 represents a smoothing reactor; 2 represents a 12-pulse inverter, 3 represents a controllable inductor, 4 represents a converter transformer and 5 represents an alternating current bus;
Fig.2 is an inner wiring diagram of a controllable inductor provided by the present invention;
Fig.3 is an effect diagram of commutation perfection of a controllable inductor provided by the present invention;
Fig.4 is a schematic diagram of a structure of a 12-pulse inverter provided by the present invention.

### Detailed Description of the Embodiments

Embodiments of the present invention will be further illustrated in detail below in combination with the accompany drawings.

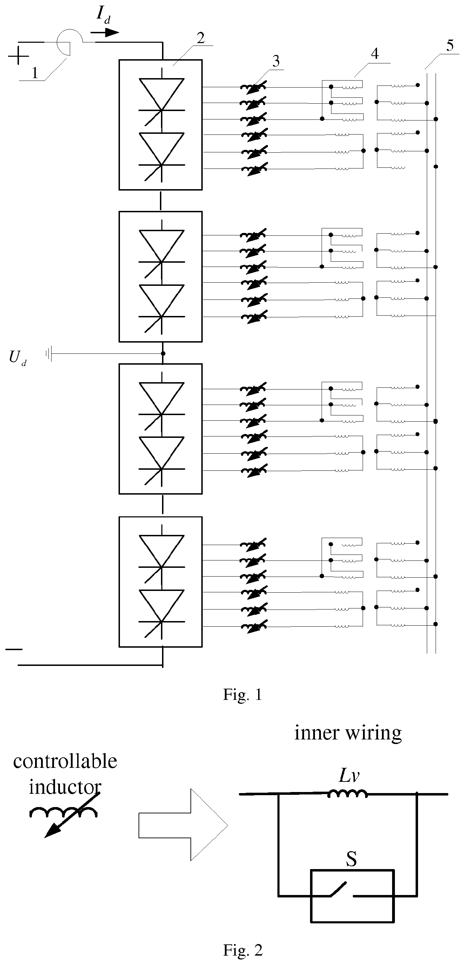

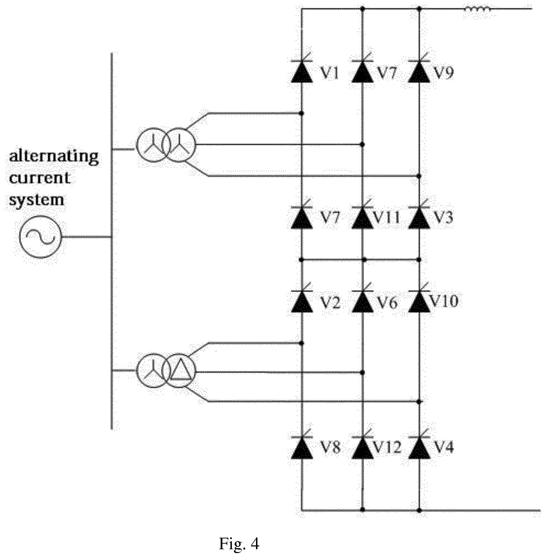

The present invention adopts a controllable commutation inductor type commutation device to perfect the commutation property of an inverter side converter valve in the case of commutation failure, the controllable inductor is serially connected between the valve side of the converter transformer and the converter inverter, the schematic diagram is as shown in Fig.1, the commutation device adopts a three-phase semi-bridge structure, the three-phase semi-bridge structure is composed of serially connected commutation units, each commutation unit includes a converter transformer and a converter inverter, and a commutation inductor is serially connected between a valve side of the converter transformer and the converter inverter. The commutation device includes a smoothing reactor; and the smoothing reactor is connected to an input end of the converter inverter, and the commutation unit includes the converter transformer, the commutation inductor and the converter inverter, which are connected to an alternating current bus after being connected in sequence. Further, the converter inverter is a 12-pulse inverter, which is composed of two traditional 6-pulse inverters that are connected in series, and each 6-pulse inverter forms a full bridge rectifier circuit by 6 thyristor bridge arms; one of the 6-pulse inverters is connected to the alternating current bus through two starlike transformers; and the other 6-pulse inverter is connected to the alternating current bus through triangular and starlike transformers. The structure is as shown in Fig.4.

The commutation inductor is of a three-phase structure, which is correspondingly connected to three phases of the converter transformer respectively, and the controllable inductor is composed of an inductor and a switch, which are connected in parallel; and the switch is switched on and off according to normal operation and commutation failure of the converter station. The inner wiring of the controllable inductor is as shown in Fig.2.

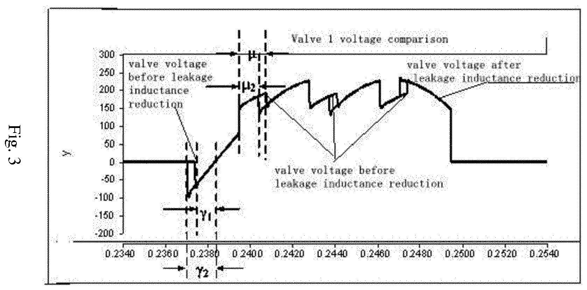

The controllable inductor must be cooperatively used with a control and protection system in a converter station, the switch S is switched on in normal operation, the controllable inductor is used as a part of the commutation inductor, when the control and protection system in the converter station monitors commutation failure, the switch S is switched off, in the process, the commutation inductance can be reduced, the commutation angle is reduced and the turn-off angle is increased, so as to perfect the commutation property, and the effect is as shown in Fig.3.

The commutation perfection degree of the novel controllable inductor type commutation bridge circuit can be determined by the leakage inductance value of the controllable inductor and the converter transformer, and the leakage inductance of the controllable inductor and the converter transformer can be reasonably designed according to the short circuit current resistances of the thyristor valve and the converter transformer.

The present invention further provides an implementation method of the commutation device based on the controllable commutation inductor, including the following steps:
(1) predicting the blocking state of the inverter after commutation through the control and protection system, and judging whether commutation failure occurs; and
(2) in the case of commutation failure, switching off the switch S to reduce the leakage inductance of the commutation inductor and increase the turn-off angle.

The present invention adopts the controllable commutation inductor type commutation bridge circuit, the controllable inductor is serially connected between the valve side of the converter transformer and the converter inverter to perfect the commutation property of the inverter side converter valve in the case of commutation failure, no major change is made to the original thyristor valve or the main circuit, and the commutation device has few in elements, is easy to implement, and has engineering practicability.

Finally, it should be noted that the above-mentioned embodiments are merely used for illustrating the technical solutions of the present invention, rather than limiting them.

## Claims

1. A commutation device based on a controllable commutation inductor, wherein the commutation device adopts a three-phase semi-bridge structure, the three-phase semi-bridge structure is composed of serially connected commutation units, wherein each commutation unit comprises a converter transformer (4) and a converter inverter (2), and the commutation inductor is serially connected between a valve side of the converter transformer (4) and the converter inverter (2); and
a controllable inductor (3) in the commutation inductor is cooperatively used with a control and protection system in a convertor station, when the convertor station operates normally, a switch (S) is switched on, and the controllable inductor (3) is contained in the commutation inductor;
**characterized in that** when the control and protection system in the convertor station detects commutation failure, the switch is switched off for perfecting the commutation property of a converter valve in the convertor station, the leakage inductance value of the commutation inductor can be reduced, the commutation angle is reduced, and the turn-off angle is increased.

2. The commutation device of claim 1, wherein the commutation device comprises a smoothing reactor (1); and the smoothing reactor (1) is connected to an input end of the converter inverter (2), and the commutation unit comprises the converter transformer (4), the commutation inductor (3) and the converter inverter (2), which are connected to an alternating current bus (5) after being connected in sequence.

3. The commutation device of any one of claims 1-2, wherein the converter inverter (2) is a 12-pulse inverter, which is composed of two 6-pulse inverters, and each 6-pulse inverter forms a full bridge rectifier circuit by 6 thyristor bridge arms; one of the 6-pulse inverters is connected to an alternating current bus (5) through two starlike transformers; and the other 6-pulse inverter is connected to the alternating current bus (5) through triangular and starlike transformers.

4. The commutation device of any one of claims 1-2, wherein the commutation inductor (3) is of a three-phase structure, which is correspondingly connected to three phases of the converter transformer (4) respectively, and the controllable inductor (3) is composed of an inductor and a switch, which are connected in parallel; and the switch is switched on and off according to normal operation and commutation failure of the converter station.

5. The commutation device of claim 1, wherein the converter transformer (4) adopts a single-phase transformer, comprising a primary coil, a secondary coil and an iron core; the magnetic core is replaced by the iron core; and the single-phase transformer adopts two starlike transformers or transformers in triangular and star shapes.

6. An implementation method of operating the commutation device of any one of claims 1 to 5, comprising the following steps:
(1) predicting the blocking state of an inverter after commutation through a control and protection system, and judging whether commutation failure occurs; and
(2) in the case of commutation failure, switching off the switch S to reduce the leakage inductance of the commutation inductor and increase the turn-off angle.

## Patentansprüche

1. Kommutierungsvorrichtung basierend auf einer steuerbaren Kommutierungsdrossel, wobei die Kommutierungsvorrichtung eine dreiphasige Halbbrückenstruktur annimmt und die dreiphasige Halbbrückenstruktur aus seriell verbundenen Kommutierungseinheiten gebildet ist, wobei jede Kommutierungseinheit einen Stromrichtertransformator (4) und einen Stromrichterwechselrichter (2) umfasst, und die Kommutierungsdrossel seriell zwischen einer Ventilseite des Stromrichtertransformators (4) und dem Stromrichterwechselrichter (2) verbunden ist; und
eine steuerbare Drossel (3) in der Kommutierungsdrossel, die kooperativ mit einem Steuerungs- und Schutzsystem in einer Stromrichterstation verwendet wird, wobei, wenn die Stromrichterstation normal betrieben wird, ein Schalter (S) eingeschaltet ist und die steuerbare Drossel (3) in der Kommutierungsdrossel enthalten ist;
**dadurch gekennzeichnet, dass,** wenn das Steuerungs- und Schutzsystem in der Stromrichterstation einen Kommutierungsfehler erkennt, der Schalter ausgeschaltet wird, um die Kommutierungseigenschaften eines Stromrichterventils in der Stromrichterstation zu perfektionieren, wobei der Streuinduktivitätswert der Kommutierungsdrossel reduziert werden kann, der Kommutierungswinkel reduziert und der Ausschaltwinkel erhöht werden.

2. Kommutierungsvorrichtung nach Anspruch 1, wobei die Kommutierungsvorrichtung eine Glättungsdrossel (1) umfasst und die Glättungsdrossel (1) mit einem Eingangsende des Stromrichterwechselrichters (2) verbunden ist, und die Kommutierungseinheit den Stromrichtertransformator (4), die Kommutierungsdrossel (3) und den Stromrichterwechselrichter (2) umfasst, die mit einem Wechselstrombus (5) verbunden sind, nachdem sie sequentiell verbunden sind.

3. Kommutierungsvorrichtung nach einem der Ansprüche 1 bis 2, wobei der Stromrichterwechselrichter (2) ein Zwölf-Puls-Stromrichter ist, der aus zwei Sechs-Puls-Stromrichtern gebildet ist, und jeder Sechs-Puls-Stromrichter einen Vollbrückengleichrichterschaltkreis durch sechs Tyristorbrückenarme bildet, wobei einer der Sechs-Puls-Stromrichter mit einem Wechselstrombus (5) durch zwei sternartige Transformatoren verbunden ist und der andere Sechs-Puls-Stromrichter mit dem Wechselstrombus (5) durch dreieck- und sternförmige Transformatoren verbunden ist.

4. Kommutierungsvorrichtung nach einem der Ansprüche 1 bis 2, wobei die Kommutierungsdrossel (3) aus einer Dreiphasenstruktur besteht, die entsprechend mit den jeweiligen drei Phasen des Stromrichtertransformators (4) verbunden sind, und die steuerbare Drossel (3) aus einer Drossel und einem Schalter gebildet ist, die parallel zueinander verbunden sind; und der Schalter an- und abgeschaltet wird entsprechend einem normalen Betrieb und Kommutierungsfehlern der Stromrichterstation.

5. Kommutierungsvorrichtung nach Anspruch 1, wobei der Stromrichtertransformator (4) einen Einphasentransformator einnimmt, der eine Primärspule, eine Sekundärspule und einen Eisenkern umfasst; wobei der magnetische Kern durch den Eisenkern ersetzt ist; und der Einphasentransformator zwei sternartige Transformatoren oder Transformatoren in Dreieck- und Sternform einnimmt.

6. Ein Implementierungsverfahren zum Betrieb der Kommutierungsvorrichtung nach einem der Ansprüche 1 bis 5, umfassend die folgenden Schritte:
(1) Vorhersagen des Blockierzustandes eines Wechselrichters nach der Kommutierung durch ein Steuer- und Schutzsystem und Beurteilen, ob ein Kommutierungsfehler aufgetreten ist; und
(2) im Fall eines Kommutierungsfehlers, Abschalten des Schalters S zum Reduzieren der Streuinduktivität der Kommutierungsdrossel und Erhöhen des Abschaltwinkels.

## Revendications

1. Dispositif de commutation basé sur un inducteur de commutation pouvant être commandé, dans lequel le dispositif de commutation adopte une structure en demi-pont triphasée, la structure en demi-pont triphasée est composée d'unités de commutation connectées en série, dans lequel chaque unité de commutation comprend un transformateur convertisseur (4) et un onduleur convertisseur (2), et l'inducteur de commutation est connecté en série entre un côté valve du transformateur convertisseur (4) et l'onduleur convertisseur (2) ; et
un inducteur pouvant être commandé (3) dans l'inducteur de commutation est utilisé de manière coopérative avec un système de commande et de protection dans une station de conversion, quand la station de conversion fonctionne normalement, un commutateur (S) est activé, et l'inducteur pouvant être commandé (3) est contenu dans l'inducteur de commutation ;
**caractérisé en ce que**, lorsque le système de commande et de protection dans la station de conversion détecte une défaillance de commutation, le commutateur est désactivé pour perfectionner la propriété de commutation d'une valve de convertisseur dans la station de conversion, la valeur d'inductance de fuite de l'inducteur de commutation peut être réduite, l'angle de commutation est réduit, et l'angle de désactivation est augmenté.

2. Dispositif de commutation selon la revendication 1, dans lequel le dispositif de commutation comprend un réacteur de lissage (1) ; et le réacteur de lissage (1) est connecté à une extrémité d'entrée de l'onduleur convertisseur (2), et l'unité de commutation comprend le transformateur convertisseur (4), l'inducteur de commutation (3) et l'onduleur convertisseur (2), qui sont connectés à un bus de courant alternatif (5) après avoir été connectés en séquence.

3. Dispositif de commutation selon l'une quelconque des revendications 1-2, dans lequel l'onduleur convertisseur (2) est un onduleur à 12 impulsions, qui est composé de deux onduleurs à 6 impulsions, et chaque onduleur à 6 impulsions forme un circuit redresseur à pont complet par 6 bras de pont à thyristor ; l'un des onduleurs à 6 impulsions est connecté à un bus de courant alternatif (5) par le biais de deux transformateurs en forme d'étoile ; et l'autre onduleur à 6 impulsions est connecté au bus à courant alternatif (5) par le biais de transformateurs triangulaires et en forme d'étoile.

4. Dispositif de commutation selon l'une quelconque des revendications 1-2, dans lequel l'inducteur de commutation (3) est d'une structure triphasée, qui est connectée de façon correspondante à trois phases du transformateur convertisseur (4) respectivement, et l'inducteur pouvant être commandé (3) est composé d'un inducteur et d'un commutateur, qui sont connectés en parallèle ; et le commutateur est activé et désactivé en fonction d'un fonctionnement normal et d'une défaillance de commutation de la station de conversion.

5. Dispositif de commutation selon la revendication 1, dans lequel le transformateur convertisseur (4) adopte un transformateur à phase unique, comprenant une bobine primaire, une bobine secondaire et un noyau en fer ; le noyau magnétique est remplacé par le noyau en fer ; et le transformateur à phase unique adopte deux transformateurs en forme d'étoile ou transformateurs en formes de triangle et d'étoile.

6. Procédé de mise en oeuvre de fonctionnement du dispositif de commutation selon l'une quelconque des revendications 1 à 5, comprenant les étapes suivantes :
(1) prédiction de l'état bloqué d'un onduleur après commutation par le biais d'un système de commande et de protection, et fait de juger si une défaillance de commutation survient ; et
(2) dans le cas d'une défaillance de commutation, désactivation du commutateur S afin de réduire l'inductance de fuite de l'inducteur de commutation et d'augmenter l'angle de désactivation.
